# EUROPEAN PATENT SPECIFICATION

(11) **EP 3 883 873 B1**
(45) Date of publication and mention of the grant of the patent: **11.05.2022**
(21) Application number: 20750774.0
(22) Date of filing: 26.06.2020
(51) Int. Cl.: B65G 65/00, B21D 43/00, B21D 43/28, B65G 1/04

(54) **METHOD AND APPARATUS FOR COLLECTING ELONGATED PRODUCTS**
VERFAHREN UND VORRICHTUNG ZUM SAMMELN VON LÄNGLICHEN PRODUKTEN
PROCÉDÉ ET APPAREIL DE COLLECTE DE PRODUITS ALLONGÉS

(30) Priority: 27.06.2019 IT 201900010344
(43) Date of publication of application: 29.09.2021
(73) Proprietor: Schnell S.p.A., 61036 Colli al Metauro (PU) (IT)
(72) Inventor: RUPOLI, Simone, 61036 Colli al Metauro (PU) (IT)
(74) Representative: Manzella & Associati
(86) International application number: PCT/IT2020/050163
(87) International publication number: WO 2020/261312

(56) References cited:
- EP-A2- 0 574 307
- DE-U1-202005 013 790
- US-A- 3 426 922

## Description

### Technical field

The present invention relates to a method and an apparatus for collecting elongated products, in particular section bars and rods for reinforced concrete, cut to size and possibly shaped, grouped in an orderly manner.

### Background of the invention

Apparatuses are known for producing bars cut to size and shaped products, usually called "shaping machines".

Such apparatuses are capable of producing, for example, the elements that make up certain structural products, intended to be used for the reinforcement of buildings, shaped or simply cut to size for a specific application.

Therefore the need is felt to group the different products that make up a specific job order in an orderly manner. For this reason, said apparatuses are usually equipped with a special storage device, for example a carriage, arranged below the work surface of the same apparatus and suitable for receiving the products during the production cycle by falling, collecting them in special separate compartments.

EP 0811440 by the same Applicant illustrates, for example, a storage device suitable for being used downstream of metal bar cutting lines. The device comprises means which defines a plurality of storage compartments, parallel to each other and arranged side by side for the storage of cut metal bars, the compartments being arranged longitudinally with respect to a cutting line. The device also comprises a plurality of conveyors consisting of arms for selectively conveying the cut metal bars to said storage compartments, as well as chain means for moving the aforementioned storage compartments in a direction transverse to the cutting line, between a receiving position and a unloading position of the same cut metal bars.

The application EP 0574307 illustrates an apparatus for storing bars, comprising a frame with shelves, a lifting device arranged laterally to the frame with shelves and equipped with a transfer member, and a device for feeding the bars to an operating machine. EP 0574307 discloses a method according to the preamble of claim 1 and an apparatus according to the preamble of claim 8.

However, known storage devices do not fully satisfy the production needs.

In fact, before collecting the products, generally selectively subdivided by individual job order and stored in respective compartments of the aforementioned storage device, it is necessary to tie them securely and mark them by means of special labeling.

In plants of the known type, the binding and labeling operations are usually carried out manually by workers in charge, who are therefore forced to position themselves in front of or above the described storage means.

These manual operations must be carried out following specific procedure, in particular after placing the apparatus in a so-called "controlled stop" state, in order to minimize any risk connected to an involuntary activation of the same apparatus when an operator is within its range. Evidently, controlled stop of the apparatus significantly reduces production yields.

Furthermore, it should be emphasized that even in compliance with the above procedure, the aforementioned manual operations still expose operators to residual risks. In fact, they must operate on the storage device loaded with shaped bars, from which, in a bent and therefore uncomfortable position, they must carry out binding and labeling operations, with evident risks due to the difficulty of operating in an area characterized by a highly irregular surface where it is easy to fall down, as well as to the presence of protruding as well as sharp products, very dangerous in case of accidental operator fall.

Moreover, also the time to unload the aforementioned storage means is to be considered, so as to clear the unloading area of the cutting and/or bending apparatus. A lifting means is usually used, which, however, require the apparatus to be stopped for the time necessary to unload the storage carriage, which can also amount to one third of the apparatus's operating cycle.

Finally, it should be noted that the known solutions for automating the collection, sorting and unloading operations of the apparatus require bulky means, due to the size of the pieces involved, as well as, therefore, being expensive.

### Disclosure

The present invention aims at solving the mentioned problems by devising a method and an apparatus for collecting elongated products, which optimizes spaces and production efficiency.

Within this aim, a further object of the present invention is to provide a method and an apparatus for collecting elongated products, which minimizes the risks for the operators.

Finally, a further object of the present invention is to provide an apparatus of simple construction and functional conception, provided with safe and reliable use, as well as with a relatively economic cost.

The mentioned objects are achieved, according to the present invention, by the method for collecting elongated products according to claim 1, as well as by the apparatus which implements this method, according to claim 8.

The method for collecting elongated products, in particular shaped metal section bars and/or straight bars, provides for arranging a first storage device below a processing machine, for receiving the aforementioned products from the machine in a longitudinal direction on a respective storage surface. In particular, the first storage device is movable according to a transfer motion on a transfer path along a transverse direction on guiding means at least between an unloading station and a loading station, below the machine, a passage station being arranged within said transfer path.

The method also provides for arranging a second storage device in a position spaced from the passage station along the transverse direction. Said second storage device is also movable according to a transfer motion, independently of the first storage device.

The method then provides for operating the second storage device from the spaced station towards the passage station, at the end of the loading step of the first storage device, and for operating the second storage device or the first storage device in a lifting motion by means of a moving assembly towards a lifting station, superimposed and lifted with respect to the aforementioned passage station.

The method then provides for positioning the second storage device in the receiving station for starting a new loading cycle serving the machine and moving the first storage device to be unloaded towards the unloading station.

Preferably the step of operating in the lifting motion comprises the step of lifting the second storage device in the lifting station, and then moving the first storage device in the transfer motion from the loading station to the unloading station, passing below the second storage device lifted in the lifting station.

Preferably, the step of positioning the second storage device comprises the step of operating the second storage device in a return stroke of the lifting motion, placing it at the height of the passage station, preferably a station arranged laterally to the machine, suitable for collecting products.

The transfer motion is preferably an alternative translation motion along the guiding means.

The apparatus for collecting elongated products, according to the invention, comprises said first storage device configured to receive, according to the longitudinal direction, the products made by the machine for processing the same products in a loading station located below the machine. The first storage device is movable along a transverse direction below the machine.

The apparatus also comprises the second storage device, movable independently of the first storage device according to a transfer motion in the transverse direction along guiding means.

The first and second storage devices are movable according to said transfer motion along said transfer path at least between an unloading station and a loading station, below the machine.

It is possible to provide that the step of unloading of said first storage device takes place at the lifting station.

The apparatus also comprises a handling unit configured to position the first storage device and/or the second storage device from a passage station, within the aforementioned transfer path, to a lifting station, lifted and superimposed in plan to the passage station, so as to allow the exit and/or entry of one of said storage devices from/to the machine.

The handling assembly, in particular, is configured to operate the storage devices in a respective path from the passage station arranged along the transfer path to the lifting station, said respective path being distinct, i.e. deviant, from the transfer path starting from the passage station, so as to at least temporarily clear the transfer path, in order to enable the storage device present on the transfer path, and therefore not moved by the moving assembly outside it, to carry out the transfer motion through the passing station.

In other words, the respective path made by a storage device following the actuation of the moving assembly is dissociated from the transfer path, deviating from it, so as to clear the passage and allow transit to the other storage device which instead remains on the transfer path.

The respective path implemented thanks to the moving assembly and the transfer path therefore preferably have in common only the passage station, from which the respective path originates, therefore deviates.

Advantageously, it is thus possible to at least partially superimpose on the same transfer path the output step to the input step of the storage devices from/to the machine. In practice, a storage device to be loaded may start from the unloading station to the passage station and the other storage device may at the same time start from the loading station to the passage station, on the opposite side, overlapping in this way the respective steps.

Therefore, thanks to the invention, it is possible to reduce the dead times of the apparatus, being immediately available and under way on the transfer path, at the end of a loading cycle, both a storage device to be unloaded and a new storage device to be arranged at the machine for a new loading cycle.

Preferably, the moving assembly comprises a lifting device placed on each side of the storage device when it is positioned on said guiding means.

The lifting device preferably comprises articulation means which may be coupled by coupling means to each of the first and second storage devices. Said coupling means may comprise, for example, pins shaped by the storage device, which may be coupled to corresponding sleeves of the lifting device.

The lifting device preferably comprises linear actuating means, in particular of the oil-hydraulic type.

The guiding means may be made by a pair of tracks spaced along the longitudinal direction.

Each track may comprise a first catenary and a second catenary, operated by respective motor members, for independent movement of the first and second storage devices.

### Description of drawings

The details of the invention will become clearer from the detailed description of a preferred embodiment of the apparatus for collecting elongated products according to the invention, illustrated only by way of non-limitative example in the accompanying drawings, where:
Figure 1 shows a perspective view of a plant for processing elongated products, provided with the apparatus according to the invention;
Figures 2 and 3 show respectively a perspective view of portions of the apparatus according to the invention;

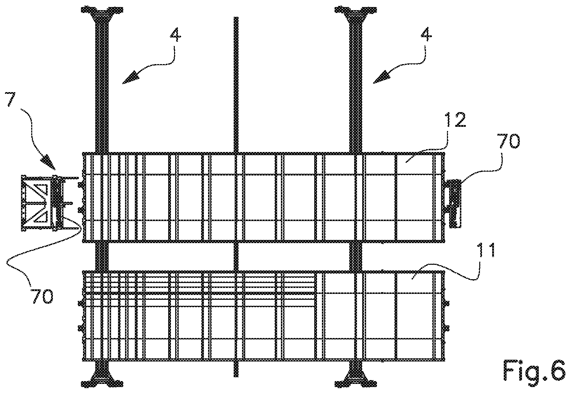

Figures 4 to 6 show a plan view of the apparatus itself, in successive operating steps.

### Best mode

With particular reference to the figures, reference number 1 indicates a machine for processing products 2, such as for example sections bars or metal bars, for example a shaping machine, provided with an apparatus 10 for collecting such products 2, according to the invention.

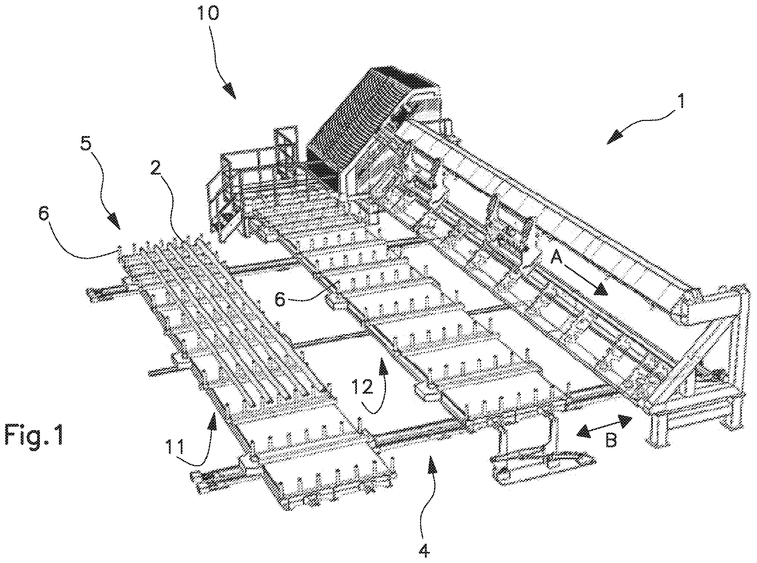

The apparatus 10 comprises a first storage device 11 and a second storage device 12, configured to receive the products 2 made by the machine 1, preferably in an orderly manner (see Figure 1).

Each storage device 11, 12 preferably comprises a preferably flat storage surface 3. Said storage surface 3 may also be preferably positioned below the work surface of the machine 1, in particular at a loading station located below this work surface, for collecting in an orderly way the produced products 2, in particular cut and/or shaped.

More precisely, each storage surface 3 preferably has a longitudinal development along a longitudinal direction A wherein the machine 1 operates and is carried by a carriage movable according to a transverse direction B on respective guiding means 4, for example tracks 40.

Each storage surface 3 is also preferably divided longitudinally into compartments 5, by means of dividing elements 6.

In practice, each storage surface 3 may be moved transversely in a controlled manner, at said loading station, in order to position a certain compartment 5 below the work surface of the machine 1, so as to be able to store the products 2 in in an orderly and selective way, for example by dividing them by individual job order, in particular according to the construction element to be produced, for example a beam element or a pillar element.

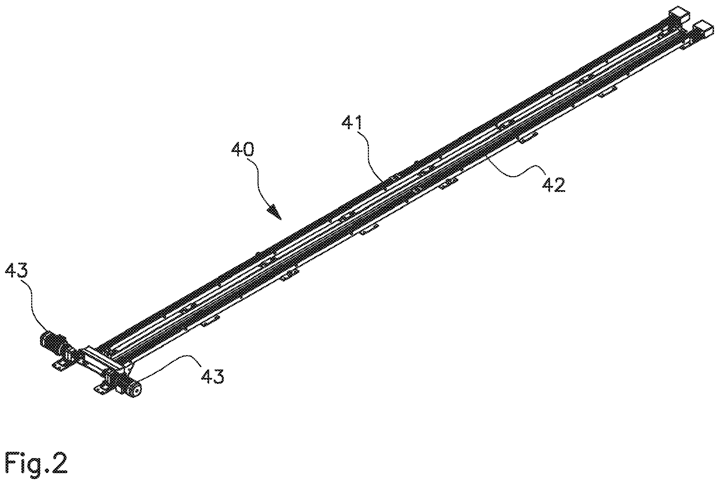

The guiding means 4 may be made from a pair of tracks 40 spaced along the longitudinal direction A (see Figures 1 and 2) and configured to direct the movement of both the storage devices 11, 12, therefore of the respective storage surfaces 3, along the transverse direction B.

In particular, each track 40 may comprise a first catenary 41 and a second catenary 42, operated by respective motor members 43, for the independent movement of the storage devices 11, 12, as described in detail below (see Figure 2).

More precisely, the tracks 40 extend at least between the loading station, at which the storage device 11, 12 is located below the machine 1, for loading the storage surface 3, and an unloading station, opposed to the machine 1 along the transverse direction B.

The apparatus also comprises a passage station, preferably arranged on the side of the machine 1, between said loading and unloading stations, so that when a storage device 11, 12 is arranged in the passage station, a respective end compartment 5 is brought close to the work surface of the machine 1, to be immediately loaded with the products 2 being processed, as described below.

The motor members 43 are therefore configured to alternately actuate each storage device 11, 12 along a transfer path in a transfer motion along the guiding means 4. Said path is therefore extended at least between the loading station and the unloading station.

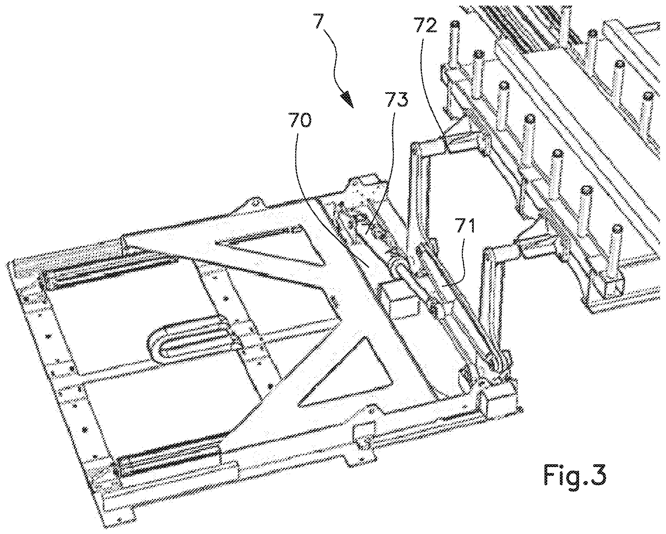

The apparatus 10 also comprises a moving assembly 7 configured to arrange a storage device 11, 12 one at a time in a lifting station, superimposed in plan on said passage station (see Figure 3).

In particular, the moving assembly 7 is configured to lift a storage device 11, 12 from a height corresponding to the passage station to a higher height, along a respective path, so as to enable the passage, on the plane of said receiving surface, of the storage device 11, 12 to be unloaded, or, conversely, of the storage device entering the machine, so as to carry out a new work cycle, as described in detail below.

The moving assembly 7 preferably comprises a lifting device 70 arranged on the side of each track 40.

The lifting device 70 may comprise for example articulation means 71, which may be coupled by coupling means 72, for example sleeves, to the storage device 11, 12, and which may be positioned, for example, at a lateral portion of the same storage device, to control said lifting motion.

The lifting device 70 may also comprise actuation means 73, for example of the linear type, in particular oil-hydraulic, for the actuation according to the lifting motion of each storage device 11, 12.

The operation of the apparatus for unloading products, which implements the method for collecting products according to the same invention, is understandable from the foregoing description.

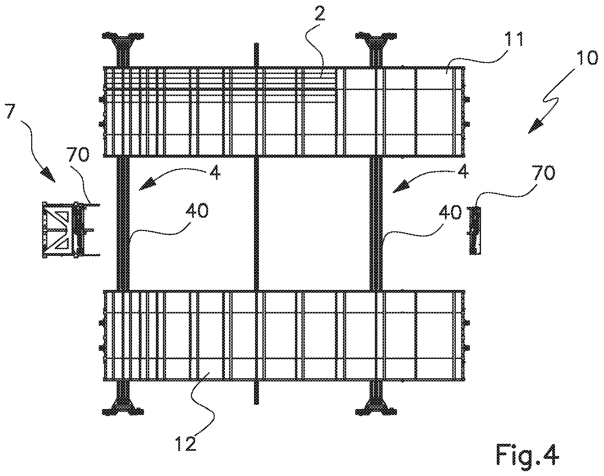

In a first operating step, illustrated in Figure 4, the first storage device 11 is operative below the machine 1, therefore in the step of loading the respective compartments 5. At the same time the second storage device 12 may then be in the unloading station, already unloading the products received in a previous operating cycle or in the unloading step.

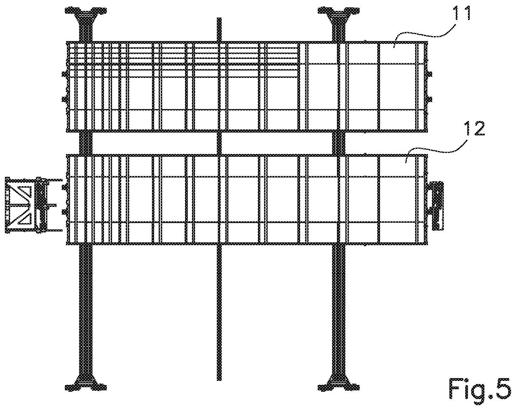

When the first storage device 11 is almost completely loaded with products 2 or when the operating cycle of the respective job order is about to be completed, and the second storage device 12 is empty, the latter is operated in motion by the respective associated motor member 43 to tracks 40, in the motion of transfer from the unloading station to the passage station. Once brought to that station, it is raised from the moving assembly 7 along the respective path to the lifting station (see Figure 5).

Finally, the first storage device 11, as soon as it is loaded with the products 2 of the job order being processed, is moved in the return stroke towards the unloading station by the respective motor member 43 along the guiding means 4. The transfer of the first storage device 11 may take place easily, thanks to the fact that the second storage device 12 is in a lifted position, in the lifting station, and therefore does not interfere in any way with the movement of the first storage device 11.

Subsequently, the moving assembly 7 makes the return stroke of said lifting motion, by means of the lifting device 70, bringing the second storage device 12 back to the height of the passage station, already in the correct position to start a new work cycle at the machine 1.

Alternatively, it is possible to provide that the exchange between the first and the second storage device 11, 12 takes place by lifting the loaded device through the actuation of the moving assembly 7. In practice, the lifting device may lift the first storage device 11 already loaded, to make way for the second storage device 12 to be loaded into the space below, at the entrance of the machine.

The method and the apparatus that implements the method according to the invention therefore enables the spaces and the production efficiency to be optimized, as well as the risks for the operators to be minimized.

More precisely, according to the invention it is possible to carry out the operations of collection and classification of the products made by a processing machine easily and safely. In particular, the interaction between the storage devices significantly reduces unloading times and repositioning relatively to the machine, as well as the machine downtime, between one unloading cycle and the next.

In the practical embodiment of the invention, the materials used, as well as the shape and the dimensions, may be modified depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. Method for collecting elongated products, in particular shaped metal section bars and/or straight bars, **characterized in that** it comprises the steps of:
a). arranging a first storage device (11) below a processing machine (1) for receiving said products (2) from said machine (3) in a longitudinal direction (A) on a respective storage surface (3), said first storage device (11) being movable according to a transferring motion on a transfer path along a transverse direction (B) on guiding means (4) at least between an unloading station and a loading station, below said machine (1), said transfer path comprising a passage station for the transit of said storage device (11);
b). arranging a second storage device (12) in a position spaced from said loading station along said transverse direction (B), said second storage device (12) also being movable according to said transferring motion, independently of said first storage device (11); the method being **characterized by**
c). actuating said second storage device (12) from said spaced station to said passage station, at the end of the loading step of said first storage device (11);
d). actuating said second storage device (12) or said first storage device (11) in a lifting motion by means of a moving assembly (7) towards a lifting station, superimposed and lifted with respect to said passage station;
e). positioning said second storage device (12) in said passage station to start a new loading cycle to service said machine (1).

2. A method as in claim 1, **characterized in that** said passage position is arranged at one side of said machine (1).

3. A method as in any one of the preceding claims, **characterized in that** it comprises the step of
f). moving said first storage device (11) to be unloaded towards said unloading station.

4. A method as in any one of the preceding claims, **characterized in that** said step of d). actuating in a lifting motion comprises the step of lifting said second storage device (12) in said lifting station, and then moving said first storage device (11) in said transferring motion from said loading station to said unloading station, passing below said second lifted storage device (12).

5. A method as in claim 4, **characterized in that** said step of e. positioning said second storage device (12) comprises the step of actuating said second storage device (12) in a return stroke of said lifting motion arranging it at the height of said passage station, to collect the products (2) from said machine (1).

6. A method as in any one of the preceding claims, **characterized in that** said transferring motion is an alternative translation motion along said guiding means (4).

7. A method according to one of the preceding claims, **characterized in that** it comprises the step of unloading said first storage device (11) at said lifting station.

8. An apparatus for collecting elongated products, in particular shaped metal section bars and/or straight bars, comprising a first storage device (11) configured to receive, according to a longitudinal direction (A), said products (2) made by a machine (1) for processing said products (2) in a loading station arranged below said machine (1), said first storage device (11) being movable along a transverse direction (B) below said machine (1), the apparatus comprising a second storage device (12), said first and said second storage device (11, 12) being independently movable according to a transfer motion along a transfer path in said transverse direction (B) on guiding means (4) at least between an unloading station and said loading station, below said machine (1), said transfer path comprising a station for the passage of said first and said second storage device (11, 12), the apparatus being **characterized in that** it comprises a moving assembly (7) configured to operate in a lifting motion one of said first storage device (11) and said second storage device (12), in a respective path from said passage station arranged along said transfer path to a lifting station, lifted and superimposed in plan to said passage station, said respective path being deviant from said transfer path starting from said passage station, thus disengaging at least temporarily said transfer path, to enable said transit of said other storage device (11, 12) through said passage station along said transfer path and overlap, at least partially along said same transfer path, the exit and the entry of said storage devices (11, 12 ) from/into said machine (1).

9. An apparatus as in claim 8, **characterized in that** said moving assembly (7) comprises a lifting device (70) positioned on each side of said storage device (11, 12), when the latter is positioned on said guiding means (4).

10. An apparatus as in claim 9, **characterized in that** the lifting device (70) comprises articulation means (71) which may be coupled by coupling means (72) to each of said first and second storage devices (11, 12).

11. An apparatus as in claim 10, **characterized in that** the lifting device (70) comprises a drive means of the linear type.

12. An apparatus as in any one of the claims from 8 to 11, **characterized in that** said guiding means (4) is made up of a pair of tracks (40) spaced along said longitudinal direction (A).

13. An apparatus as in claim 12, **characterized in that** each said track (40) comprises a first catenary (41) and a second catenary (42), operated by respective motor members (43), for independently moving said first and said second storage device (11, 12).

## Patentansprüche

1. Verfahren zum Sammeln langgestreckter Produkte, insbesondere geformter Metallprofilstäbe und/oder gerader Stäbe, **dadurch gekennzeichnet, dass** es die Schritte umfasst des:
a). Anordnens einer ersten Lagervorrichtung (11) unter einer Verarbeitungsmaschine (1) zum Aufnehmen der Produkte (2) von der Maschine (3) in einer Längsrichtung (A) auf einer jeweiligen Lageroberfläche (3), wobei die erste Lagervorrichtung (11) gemäß einer Transferbewegung auf einem Transferpfad entlang einer Querrichtung (B) auf Führungsmitteln (4) mindestens zwischen einer Entladestation und einer Beladestation unter der Maschine (1) bewegbar ist, wobei der Transferpfad eine Durchgangsstation für den Transit der Lagervorrichtung (11) umfasst;
b). Anordnens einer zweiten Lagervorrichtung (12) in einer Position, die von der Beladestation entlang der Querrichtung (B) beabstandet ist, wobei die zweite Lagervorrichtung (12) auch unabhängig von der ersten Lagervorrichtung (11) gemäß der Transferbewegung bewegbar ist;
wobei das Verfahren **gekennzeichnet ist durch**
c). Betätigen der zweiten Lagervorrichtung (12) von der beabstandeten Station zu der Durchgangsstation an dem Ende des Ladeschritts der ersten Lagervorrichtung (11);
d). Betätigen der zweiten Lagervorrichtung (12) oder der ersten Lagervorrichtung (11) in einer Hubbewegung mittels einer Bewegungsbaugruppe (7) zu einer Hubstation, die in Bezug auf die Durchgangsstation überlagert und angehoben ist;
e). Positionieren der zweiten Lagervorrichtung (12) in der Durchgangsstation, um einen neuen Ladezyklus zu starten, um die Maschine (1) zu warten

2. Verfahren nach Anspruch 1, **dadurch gekennzeichnet, dass** die Durchgangsposition an einer Seite der Maschine (1) angeordnet ist.

3. Verfahren nach einem der vorstehenden Ansprüche, **dadurch gekennzeichnet, dass** es den Schritt des
f). Bewegens der ersten Lagervorrichtung (11), um in Richtung der Entladestation entladen zu werden, umfasst.

4. Verfahren nach einem der vorstehenden Ansprüche, **dadurch gekennzeichnet, dass** der Schritt des d). Betätigens in einer Hubbewegung den Schritt des Hebens der zweiten Lagervorrichtung (12) in der Hubstation und dann des Bewegens der ersten Lagervorrichtung (11) in der Transferbewegung von der Beladestation zu der Entladestation, die unter der zweiten gehobenen Lagervorrichtung (12) durchgeht, umfasst.

5. Verfahren nach Anspruch 4, **dadurch gekennzeichnet, dass** der Schritt des e. Positionierens der zweiten Lagervorrichtung (12) den Schritt des Betätigens der zweiten Lagervorrichtung (12) in einem Rückhub der Hubbewegung umfasst, der sie auf der Höhe der Durchgangsstation anordnet, um die Produkte (2) von der Maschine (1) zu sammeln.

6. Verfahren nach einem der vorstehenden Ansprüche, **dadurch gekennzeichnet, dass** die Transferbewegung eine wechselweise Translationsbewegung entlang der Führungsmittel (4) ist.

7. Verfahren nach einem der vorstehenden Ansprüche, **dadurch gekennzeichnet, dass** es den Schritt des Entladens der ersten Lagervorrichtung (11) an der Hubstation umfasst.

8. Einrichtung zum Sammeln langgestreckter Produkte, insbesondere geformter Metallprofilstäbe und/oder gerader Stäbe, die eine erste Lagervorrichtung (11) umfasst, die dazu konfiguriert ist, gemäß einer Längsrichtung (A) die Produkte (2), die von einer Maschine (1) hergestellt werden, zum Verarbeiten der Produkte (2) in einer Beladestation aufzunehmen, die unter der Maschine (1) angeordnet ist, wobei die erste Lagervorrichtung (11) entlang einer Querrichtung (B) unter der Maschine (1) bewegbar ist, wobei die Einrichtung eine zweite Lagervorrichtung (12) umfasst, wobei die erste und die zweite Lagervorrichtung (11, 12) unabhängig gemäß einer Transferbewegung entlang eines Transferpfads in der Querrichtung (B) auf Führungsmitteln (4) mindestens zwischen einer Entladestation und der Beladestation unter der Maschine (1) bewegbar sind, wobei der Transferpfad eine Station für den Durchgang der ersten und der zweiten Lagervorrichtung (11, 12) umfasst, wobei die Einrichtung **dadurch gekennzeichnet ist, dass** sie eine Bewegungsbaugruppe (7) umfasst, die dazu konfiguriert ist, in einer Hubbewegung eine der ersten Lagervorrichtung (11) und der zweiten Lagervorrichtung (12) in einem jeweiligen Pfad von der Durchgangsstation, die entlang des Transferpfads angeordnet ist, zu einer Hubstation angehoben und in der Draufsicht zu der Durchgangsstation überlagert zu betätigen, wobei der jeweilige Pfad, von dem Transferpfad ausgehend von der Durchgangsstation abweicht, wodurch der Transferpfad mindestens vorübergehend außer Eingriff gebracht wird, um den Transit der anderen Lagervorrichtung (11, 12) durch die Durchgangsstation entlang des Transferpfads zu ermöglichen und den Ausgang und den Eingang der Lagervorrichtungen (11, 12) von/in die Maschine (1) mindestens teilweise entlang des gleichen Transferpfads zu überlappen.

9. Einrichtung nach Anspruch 8, **dadurch gekennzeichnet, dass** die Bewegungsbaugruppe (7) eine Hubvorrichtung (70) umfasst, die auf jeder Seite der Lagervorrichtung (11, 12) positioniert ist, wenn Letztere auf den Führungsmitteln (4) positioniert ist.

10. Einrichtung nach Anspruch 9, **dadurch gekennzeichnet, dass** die Hubvorrichtung (70) Gelenkmittel (71) umfasst, die von Kopplungsmitteln (72) mit jeder der ersten und der zweiten Lagervorrichtung (11, 12) gekoppelt werden können.

11. Einrichtung nach Anspruch 10, **dadurch gekennzeichnet, dass** die Hubvorrichtung (70) ein Antriebsmittel vom linearen Typ umfasst.

12. Einrichtung nach einem der Ansprüche 8 bis 11, **dadurch gekennzeichnet, dass** die Führungsmittel (4) aus einem Paar von Bahnen (40), die entlang der Längsrichtung (A) beabstandet sind, hergestellt ist.

13. Einrichtung nach Anspruch 12, **dadurch gekennzeichnet, dass** jede Bahn (40) eine erste Kettenfahrleitung (41) und eine zweite Kettenfahrleitung (42) umfasst, die von jeweiligen, Motorelementen (43) zum unabhängigen Bewegen der ersten und der zweiten Lagervorrichtung (11, 12) betrieben sind.

## Revendications

1. Procédé de collecte de produits allongés, en particulier de profilés métalliques et/ou de barres droites, **caractérisé en ce qu'**il comprend les étapes de:
a). disposition d'un premier dispositif de stockage (11) sous une machine de traitement (1) pour recevoir lesdits produits (2) de ladite machine (3) dans une direction longitudinale (A) sur une surface de stockage respective (3), ledit premier dispositif de stockage (11) étant mobile selon un mouvement de transfert sur un trajet de transfert le long d'une direction transversale (B) sur des moyens de guidage (4) au moins entre une station de déchargement et une station de chargement, sous ladite machine (1), ledit trajet de transfert comprenant une station de passage pour le passage dudit dispositif de stockage (11) ;
b). disposition d'un second dispositif de stockage (12) dans une position espacée de ladite station de chargement le long de ladite direction transversale (B), ledit second dispositif de stockage (12) étant également mobile selon ledit mouvement de transfert, indépendamment dudit premier dispositif de stockage (11);
le procédé étant **caractérisé par**
c). l'actionnement dudit second dispositif de stockage (12) de ladite station espacée à ladite station de passage, à la fin de l'étape de chargement dudit premier dispositif de stockage (11);
d). l'actionnement dudit second dispositif de stockage (12) ou dudit premier dispositif de stockage (11) dans un mouvement de levage au moyen d'un ensemble mobile (7) vers une station de levage, superposée et soulevée par rapport à ladite station de passage ;
e). le positionnement dudit second dispositif de stockage (12) dans ladite station de passage pour démarrer un nouveau cycle de chargement pour l'entretien de ladite machine (1).

2. Procédé selon la revendication 1, **caractérisé en ce que** ladite position de passage est disposée sur un côté de ladite machine (1).

3. Procédé selon l'une quelconque des revendications précédentes, **caractérisé en ce qu'**il comprend l'étape consistant à
f). déplacer ledit premier dispositif de stockage (11) à décharger vers ladite station de déchargement.

4. Procédé selon l'une quelconque des revendications précédentes, **caractérisé en ce que** ladite étape d). d'actionnement dans un mouvement de levage comprend l'étape de levage dudit second dispositif de stockage (12) dans ladite station de levage, puis déplacer ledit premier dispositif de stockage (11) dans ledit mouvement de transfert de ladite station de chargement à ladite station de déchargement, en passant sous ledit second dispositif de stockage levé (12).

5. Procédé selon la revendication 4, **caractérisé en ce que** ladite étape e. de positionnement dudit second dispositif de stockage (12) comprend l'étape d'actionnement dudit second dispositif de stockage (12) dans une course de retour dudit mouvement de levage le disposant à la hauteur de ladite station de passage, pour collecter les produits (2) à partir de ladite machine (1).

6. Procédé selon l'une quelconque des revendications précédentes, **caractérisé en ce que** ledit mouvement de transfert est un mouvement de translation alternatif le long desdits moyens de guidage (4).

7. Procédé selon l'une des revendications précédentes, **caractérisé en ce qu'**il comprend l'étape de déchargement dudit premier dispositif de stockage (11) au niveau de ladite station de levage.

8. Appareil de collecte de produits allongés, en particulier de profilés métalliques et/ou de barres droites, comprenant un premier dispositif de stockage (11) configuré pour recevoir, selon une direction longitudinale (A), lesdits produits (2) fabriqués par une machine (1) pour traiter lesdits produits (2) dans une station de chargement disposée sous ladite machine (1), ledit premier dispositif de stockage (11) étant mobile le long d'une direction transversale (B) sous ladite machine (1), l'appareil comprenant un second dispositif de stockage (12), ledit premier et ledit second dispositif de stockage (11, 12) étant mobile indépendamment selon un mouvement de transfert le long d'un trajet de transfert dans ladite direction transversale (B) sur des moyens de guidage (4) au moins entre une station de déchargement et ladite station de chargement, sous ladite machine (1), ledit trajet de transfert comprenant une station pour le passage desdits premier et second dispositifs de stockage (11, 12), l'appareil étant **caractérisé en ce qu'**il comprend un ensemble mobile (7) configuré pour fonctionner dans un mouvement de levage soit dudit premier dispositif de stockage (11) soit dudit second dispositif de stockage (12), dans un trajet respectif allant de ladite station de passage disposée le long dudit trajet de transfert à une station de levage, soulevée et superposée en plan à ladite station de passage, ledit trajet respectif étant déviant dudit trajet de transfert à partir de ladite station de passage, désengageant ainsi au moins temporairement ledit trajet de transfert, pour permettre ledit transit dudit autre dispositif de stockage (11, 12) à travers ladite station de passage le long dudit trajet de transfert et chevauchent, au moins partiellement le long dudit même trajet de transfert, la sortie et l'entrée desdits dispositifs de stockage (11, 12) à partir de/dans ladite machine (1).

9. Appareil selon la revendication 8, **caractérisé en ce que** ledit ensemble mobile (7) comprend un dispositif de levage (70) positionné de chaque côté dudit dispositif de stockage (11, 12), lorsque ce dernier est positionné sur lesdits moyens de guidage (4).

10. Appareil selon la revendication 9, **caractérisé en ce que** le dispositif de levage (70) comprend des moyens d'articulation (71) qui peuvent être couplés par des moyens de couplage (72) à chacun desdits premier et second dispositifs de stockage (11, 12).

11. Appareil selon la revendication 10, **caractérisé en ce que** le dispositif de levage (70) comprend des moyens d'entraînement du type linéaire.

12. Appareil selon l'une quelconque des revendications 8 à 11, **caractérisé en ce que** lesdits moyens de guidage (4) sont constitués d'une paire de pistes (40) espacées le long de ladite direction longitudinale (A).

13. Appareil selon la revendication 12, **caractérisé en ce que** chaque dite piste (40) comprend une première caténaire (41) et une seconde caténaire (42), actionnées par des éléments de moteur respectifs (43), pour déplacer indépendamment lesdits premier et second dispositifs de stockage (11, 12).
